# DEMANDE DE BREVET EUROPEEN

(11) **EP 0 999 714 A1**
(43) Date de publication de la demande: **10.05.2000**
(21) Numéro de dépôt: 99402732.4
(22) Date de dépôt: 03.11.1999
(51) Int. Cl.: H04Q 7/32

(54) **Procédé de programmation d'un appareil, notamment d'un téléphone mobile**

(30) Priorité: 05.11.1998 FR 9814107
(71) Demandeur: SAGEM SA, 75116 Paris (FR)
(72) Inventeur: Darnault, M. Patrick, 95000 Cergy (FR); Marjollet, M. Laurent, 95000 Cergy (FR)
(74) Mandataire: Schmit, Christian Norbert Marie

(57) **Abrégé**

Pour faciliter la personnalisation des appareils (1) notamment mobiles dont le fonctionnement est validé par une carte (18) à puce, on prévoit d'utiliser une carie à puce cargo (25) munie dans sa mémoire d'une part d'éléments de fonctions (28, 29) complémentaires et d'autre part d'unités (39) de déchargement. Au fur et à mesure que les fonctions sont déchargées (46, 47) dans le téléphone mobile, on oblitère les unités. On montre qu'on organise de cette façon, d'une manière simple, la distribution des services en évitant tout piratage d'une part et tout processus compliqué d'autre part.

## Description

La présente invention a pour objet un procédé de programmation d'un appareil, notamment d'un téléphone mobile. Le but de l'invention est de simplifier une mise à jour de programmes d'un téléphone mobile tout en permettant une commercialisation comptabilisée de nouveaux services mis à disposition des utilisateurs avec leur téléphone mobile. Plus généralement, l'invention concerne la programmation de n'importe quel appareil dont le fonctionnement est conditionné par la présence d'une carte à puce, et notamment une carte à puce de validation de son fonctionnement. A ce titre, l'invention concerne plus particulièrement les appareils mobiles encore que cela ne soit pas une obligation.

Les téléphones mobiles de type GSM fonctionnent avec une carte à puce, ou avec un jeton à puce, amovible, inséré dans un lecteur contenu dans un boîtier du téléphone mobile. Cette carte à puce est appelée carte SIM pour Secure Identification Module (Module d'identification Sécurisé en français). Une des fonctions essentielles de ces cartes à puce est d'assurer que le téléphone mobile est utilisé par son véritable possesseur. En effet, au moment de la mise en service, au moment de la mise sous tension du téléphone mobile, un processus comporte la reconnaissance d'un code secret connu du titulaire du téléphone mobile. Ce code secret est comparé, dans la carte à puce, à un code secret contenu par celle-ci. En cas de coïncidence, le fonctionnement du téléphone mobile est autorisé. Autrement il est interdit.

Comme autre fonction, la carte à puce a celle de mémoriser différentes informations relatives au titulaire, notamment celles d'un abonnement auprès d'un opérateur de téléphonie mobile. De ce fait, avec un tel système n'importe quel utilisateur a la possibilité d'échanger son téléphone mobile contre un autre, parce qu'il le jugera obsolète ou pour toute autre raison. Il peut ensuite faire fonctionner cet autre téléphone mobile sans difficulté en y insérant sa carte à puce d'abonnement. Les identifications d'abonnement mémorisées dans la carte à puce concernent de préférence, mais non obligatoirement, un numéro de série de la puce, un code secret associé à un algorithme de reconnaissance, un numéro de téléphone auquel l'abonné peut être joint, ainsi qu'un numéro d'abonnement dit IMSI (Ces deux numéros pouvant être un seul et même numéro) ou toute autre information.

Un téléphone mobile, et dans le cas général un équipement apte à fonctionner sous le contrôle d'une carte à puce, comportent un système informatique analogue à celui d'un micro-ordinateur, quoique certaines fonctions puissent être plus spécialisées. Un système informatique d'un téléphone mobile comporte essentiellement une mémoire programme et une mémoire de données en relation avec un microprocesseur. La mémoire programme comporte tous les programmes qu'on peut faire exécuter par le téléphone mobile. La mémoire de données comporte généralement le numéro de série du téléphone mobile ainsi que différentes données propres à l'utilisateur. Parmi les données propres à l'utilisateur, on connaît des données de répertoire : l'utilisateur a la faculté de mémoriser des numéros de téléphone préférés dans un tel répertoire. En général, un tel répertoire est associé à une fonction de composition automatique.

La mémoire programme comporte donc un sous-programme pour exécuter cette fonction de composition automatique. D'autres fonctions sont connues. Par exemple la fonction mains libres dans laquelle, à la demande de l'utilisateur, un haut-parleur du téléphone mobile émet des sons amplifiés pour qu'on puisse l'entendre, éventuellement à plusieurs, sans avoir à plaquer le téléphone mobile contre son oreille. Il est également possible de munir le téléphone mobile d'une fonction agenda, d'une fonction calculette et ainsi de suite.

La mise à disposition de ces fonctions présente plusieurs particularités. Premièrement l'élaboration des fonctions nouvelles peut se faire au fur et à mesure du temps. Elles peuvent même être perfectionnées d'une première version à une version suivante. Il importe alors pour les utilisateurs qui n'en sont pas munis, ou seulement d'une version ancienne, de leur mettre à disposition une fonction nouvelle, la plus récente, en principe la plus puissante. D'autre part la mémorisation de toutes ces fonctions dans une mémoire programme d'un téléphone mobile conduit celle-ci à une taille importante. Compte tenu de limites de capacité rencontrées dans certains cas, il peut être nécessaire de réaliser des arbitrages, par exemple en favorisant la présence d'une fonction, au détriment d'une autre qui sera absente. Troisièmement, quand bien même cette limitation technique n'est pas présente, il est envisageable d'amortir les coûts de mise au point de ces fonctions en en vendant l'utilité à des utilisateurs de téléphone mobile. Par exemple au moment de son abonnement, ou au moment de l'achat d'un téléphone mobile, un utilisateur peut souscrire, moyennant un supplément de prix, à des options supplémentaires de fonctionnement de son téléphone mobile.

Dans tous les cas, lorsque le choix est fait, le dernier problème qui se pose est celui de la programmation effective du fonctionnement du téléphone mobile en fonction des desiderata manifestés par l'utilisateur. Il est possible, pour aboutir à ce résultat, de connecter le téléphone mobile par son connecteur d'embase sur un socle avec un connecteur multibroches. Le socle est relié par ailleurs à un équipement tel qu'un micro-ordinateur. Le micro-ordinateur sert à charger dans la mémoire programme du téléphone mobile toutes les fonctions que l'utilisateur peut désirer. Autrement, il peut être envisagé de télécharger dans la mémoire programme, par les voies hertziennes, toutes les fonctions auxquelles l'utilisateur peut souscrire.

Dans le premier cas il est nécessaire de disposer d'un équipement assez complexe, ce qui est antinomique d'une vente rapide. En outre, il n'y a aucune garantie pour un opérateur de téléphonie mobile que le revendeur qui réalise cette programmation ne va pas offrir toutes les fonctions qu'il veut, à tous les clients de son choix, sans lui en rendre compte. Dans ce cas, la commercialisation des services a un mauvais rendement économique, le revendeur intermédiaire étant incité pour réaliser ses objectifs commerciaux à offrir en cadeau des fonctions complémentaires.

Dans la deuxième solution, il faut au moins qu'une communication puisse être établie. Or une telle communication n'est établie que pour des téléphones mobiles, pas pour des appareils quelconques. En outre, pour un téléphone mobile la communication n'est établie qu'une fois que l'abonnement est constitué. Par ailleurs, en utilisant un tel téléchargement, il devient difficile de comptabiliser d'une manière séparée ce qui va être dû par l'utilisateur et ce qui va être dû par l'intermédiaire. En principe tout est facturé à l'utilisateur. Dans ces conditions il n'est véritablement pas possible à l'intermédiaire d'adopter une stratégie d'avantages commerciaux. Toutes les fonctions souscrites seront automatiquement facturées, l'intermédiaire n'a pas de possibilité de faire des remises.

Une solution pour remédier à ces problèmes pourrait consister à charger dans la carte SIM qui permet de faire fonctionner le téléphone mobile toutes les fonctions auxquelles pourrait souscrire l'utilisateur. Une telle solution se heurte cependant à plusieurs problèmes. Si on veut à la fois établir un programme spécifique à un utilisateur et à la fois contrôler (pour l'opérateur de téléphonie mobile) la mise à disposition des différentes fonctions, on se retrouve confronté à un problème de mise à jour en temps réel. A l'époque actuelle une telle mise à jour en temps réel est cependant indispensable. En outre, dans une carte SIM la taille mémoire est limitée. En effet, une telle carte doit comporter une mémoire programme chargée d'exécuter toutes les fonctions de sécurité. Le programme relatif à cette fonction de sécurité est déjà volumineux : il ne reste pas vraiment de place pour y stocker tous les sous-programmes envisageables.

Pour résoudre ce problème, dans l'invention on prévoit d'agir d'une manière tout à fait originale. On prévoit de remplacer, temporairement, la carte SIM du téléphone mobile par une carte dite cargo qui comprend les sous-programmes correspondant aux options qu'on veut mettre à disposition de l'utilisateur. Dans un cas préféré, la carte cargo comporte toutes les options qu'on pourrait mettre à disposition de l'utilisateur. Lors de l'introduction de cette carte cargo dans le téléphone mobile, ou dans l'appareil, parce qu'elle transporte les options seulement, le téléphone mobile ou l'appareil lancent un programme de déchargement du contenu de celle carte cargo dans les mémoires du téléphone mobile. Dans un perfectionnement, ce déchargement se fait sous contrôle de telle façon que l'utilisateur, et/ou l'intermédiaire, puissent sélectionner et valider les options dont ils veulent disposer dans le téléphone mobile.

Dans un autre perfectionnement, au prorata des déchargements d'options dans les téléphones mobiles exécutés par l'intermédiaire, des unités sont oblitérées dans la carte cargo de telle façon que le décompte des services mis à disposition soit effectué exactement. Eventuellement un tel décompte peut être effectué nature de service par nature de service. Lorsqu'une carte cargo est épuisée, l'intermédiaire doit se réapprovisionner auprès de l'opérateur de téléphonie mobile afin de pouvoir à nouveau offrir les services.

En agissant de cette façon, bien entendu on est amené à se dispenser d'un équipement complexe tel qu'un micro-ordinateur associé à un connecteur spécifique. On utilise en effet un connecteur déjà présent dans le téléphone mobile : celui qui permet de lire la carte SIM.

En outre, on règle le problème de la taille mémoire parce que dans la carte cargo, d'une part, toute la mémoire peut être consacrée aux fonctions à décharger. D'autre part dans un perfectionnement de l'invention, au lieu de charger les instructions des programmes, on chargera des clefs de débridage de sous-programmes, déjà présents dans un programme général contenu dans la mémoire du téléphone mobile et qui permettent la mise en oeuvre des fonctions désirées. Ces clefs ne sont pas aussi volumineuses que les instructions des programmes eux-mêmes et donc peuvent être mémorisées en plus grand nombre dans une mémoire réduite d'une carte à puce.

L'invention a donc pour objet un procédé de programmation d'un appareil dans lequel
- on mémorise dans une mémoire programme de l'appareil des instructions à exécuter par cet appareil,
   caractérisé en ce qu'il comporte les étapes suivantes
- on enregistre dans une carte à puce cargo des éléments d'instructions à exécuter,
- on enregistre dans un programme d'initialisation de l'appareil une étape de déchargement de ces éléments d'instructions en provenance d'un lecteur de carte à puce de cet appareil,
- on place la carte à puce cargo dans l'appareil,
- on déclenche par le programme d'initialisation le déchargement des éléments d'instruction,
- et on exécute ensuite les instructions à l'aide de ces éléments d'instruction.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : la représentation schématique d'un téléphone mobile, d'une carte à puce SIM, et d'une carte à puce cargo selon l'invention pour mettre en oeuvre le procédé de l'invention;
- Figure 2 : un organigramme des opérations à effectuer pour mettre en oeuvre le procédé de l'invention.

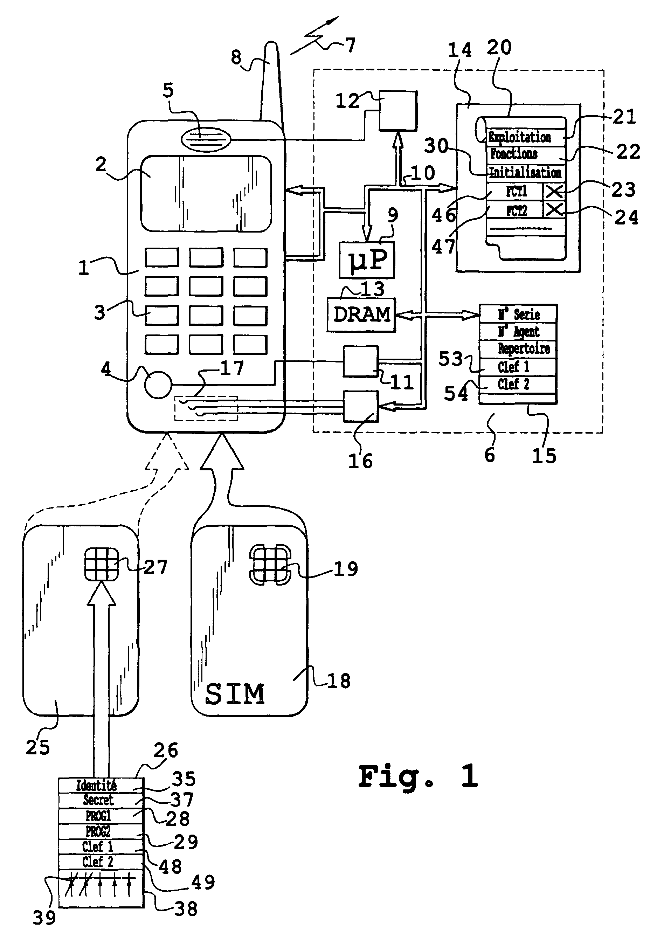

La figure 1 montre un téléphone mobile utilisable à titre d'appareil, mobile dans le mode préféré, pour mettre en oeuvre le procédé de l'invention. Ce téléphone mobile comporte d'une manière connue un boîtier 1 maintenant un écran 2, des boutons de commande 3, et d'une manière non visible un microphone 4 et un haut-parleur 5 en relation avec un circuit électronique 6 interne au téléphone mobile. Le circuit 6 permet au téléphone mobile d'échanger des communications hertziennes 7 au moyen d'un aérien de radiodiffusion 8. Le circuit électronique 6 comporte un microprocesseur 9 relié par un bus 10 à des circuits 11 de traitement de la parole prononcée par un utilisateur et à des circuits 12 de restitution de la parole reliés au haut-parleur 5. Le bus 10 est encore en relation avec une mémoire de travail 13, une mémoire programme 14, et un mémoire de données 15. Enfin dans le cadre d'un téléphone de type GSM ou plus généralement d'un appareil mobile ou non, à fonctionnement contrôlé par une carte à puce, le bus 11 est en relation avec un circuit d'interface 16 connecté à un lecteur 17 de carte à puce. Le téléphone mobile peut comporter bien d'autres équipements, notamment le connecteur d'embase évoqué ci-dessus.

Pour son fonctionnement, un tel appareil nécessite l'introduction d'une carte à puce de validation. Dans le cadre du téléphone mobile la carte à puce de validation 18 est une carte dite SIM muni d'un connecteur 19 adapté à coopérer avec le lecteur 17. Un circuit électronique non représenté y est associé au connecteur 19. Ce circuit électronique est du même type que le circuit 6 et comporte notamment un microprocesseur et surtout dans sa mémoire programme des programmes d'authentification pour n'autoriser le fonctionnement du téléphone mobile qu'à un véritable porteur : celui qui est capable de composer un code secret avec les boutons 3 au moment de la mise en service du téléphone mobile.

Un programme 20 contenu dans la mémoire programme 14 comporte au moins un système d'exploitation 21 ainsi que certaines fonctions systématiques 22. Ces fonctions sont les fonctions d'émission, de réception, et de traitement de la parole indispensables au téléphone mobile. Le but de l'invention est de placer dans le programme 20, des sous-programmes concernant des fonctions supplémentaires FCT1, FCT2, etc., optionnelles, commercialisables. Dans l'invention, ces fonctions, FCT1, FCT2, etc. ne sont pas présentes sous une forme exécutables dans le programme 20, au départ. Elles ne sont pas présentes sous une forme exécutables, soit parce qu'elles ne sont pas présentes du tout, soit parce qu'elles sont présentes mais bridées par des verrous 23 et 24.

Le procédé de l'invention, pour mémoriser, ou au moins activer les fonctions supplémentaires à utiliser consiste à enlever la carte à puce 18 SIM (qui est indispensable pour le fonctionnement du téléphone mobile), et à la remplacer par une carte à puce cargo 25 qui ne sert que pour le transport des fonctions à incorporer dans la mémoire programme 20. De préférence, celle interversion des cartes à puce s'effectuera en arrêtant préalablement le téléphone mobile et en le redémarrant. La carte à puce cargo 25 comporte alors dans sa mémoire 26 relié à son connecteur 27 des éléments d'instructions 28 et 29 correspondant aux fonctions FCT1 et FCT2 etc. à mettre à disposition des utilisateurs.

Pour provoquer le déchargement des éléments d'instructions 28-29 dans la mémoire 20 du téléphone mobile, on munit alors le programme 20 d'un sous-programme 30 de déchargement de ces éléments d'instructions en provenance du lecteur de carte à puce 17. De préférence, ce sous-programme 30 de déchargement sera un sous-programme d'initialisation. En effet, pour enlever la carte à puce 18 et la remplacer par la carte à puce 25 il est préférable d'effecteur ces remplacements hors tension. Ceci permet d'éviter des éventuels courts-circuits ou chocs électriques. De plus, un tel type de remplacement dans lequel on met l'appareil hors service est une opération intuitivement acceptée par les différents intervenants. A priori, elle n'est pas indispensable. Mais elle est beaucoup plus pratique. En conséquence, lorsqu'on remet en service le téléphone mobile après y avoir inséré la carte cargo 25, le programme de déchargement de l'invention sera naturellement compris dans un programme d'initialisation 30 du téléphone mobile et comportera celle étape supplémentaire selon l'invention. Dans la présente demande, programme d'initialisation voudra donc dire déchargement, que le déchargement soit effectué au démarrage ou non.

Dans ces conditions, les éléments d'instructions 28 et 29 se déchargent et viennent se placer soit dans la mémoire dynamique de travail 13, soit dans la mémoire non volatile 14. Par suite il est possible d'exécuter les instructions correspondant aux fonctions FCT1, FCT2, etc. Cette exécution n'est toutefois possible qu'en remplaçant la carte cargo 25 par la carte SIM 18, au besoin en réinitialisant une deuxième fois le téléphone mobile.

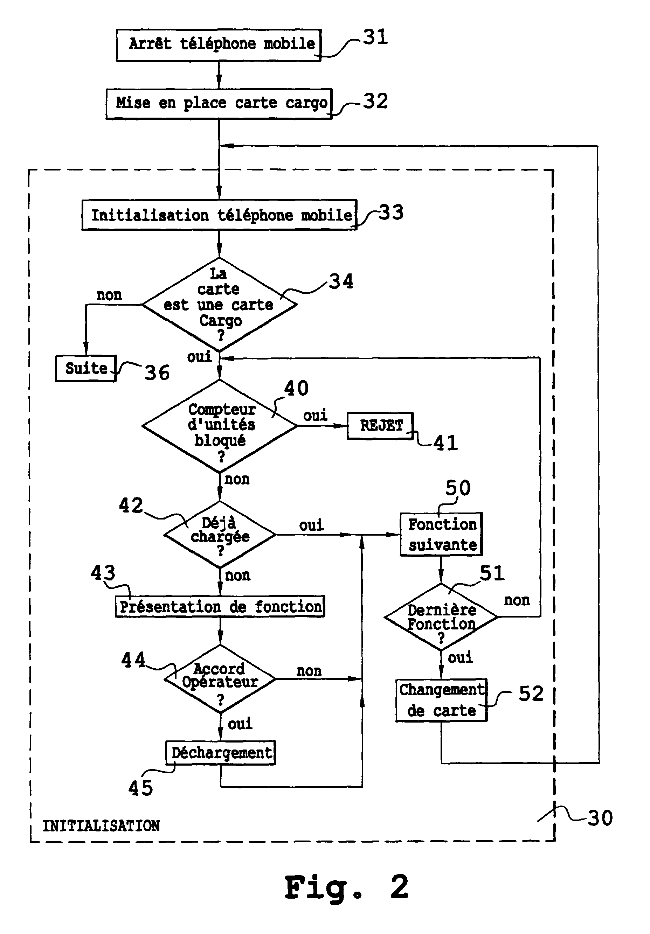

La figure 2 montre en détail les différentes étapes du procédé de l'invention ainsi présentées dans le cadre d'une application à un téléphone mobile.

Au cours d'une première étape 31 on arrête ainsi le téléphone mobile. Dans la pratique cet arrêt est spécifique et n'est qu'une mise en veille et comportera de préférence, dans l'invention, uniquement la neutralisation de l'interface 16 de manière à éviter les courts-circuits sur le lecteur 17. Cette mise en veille ne comportera pas nécessairement un rafraîchissement de la mémoire volatile 13. De préférence cette mise en veille du téléphone mobile sera effectuée en maintenant la batterie on service de manière justement à préserver le contenu notamment de celle mémoire volatile 13. De cette façon, la fonctionnalité du téléphone mobile est maintenue.

Au cours d'une opération ultérieure 32, on remplace dans le lecteur 17 la carte à puce 18 par la carte à puce cargo 25. Au cours d'une opération 33 suivante, on initialise le téléphone mobile on lançant le sous-programme 30. En fait, on va essentiellement déclencher le déchargement des éléments d'instructions 28 et 29 de la carte 25 dans la mémoire 20. On aurait pu pour ce faire prévoir une séquence, avec les boutons de commande 3, pour que, malgré l'enlèvement de la carte à puce 18 des autorisations de fonctionnement correspondant à la session mise en service préalablement soient conservées, et que seules les opérations de déchargement elles-mêmes soient lancées. De préférence cependant, comme indiqué ci-dessus cette opération de déchargement sera provoquée par une opération d'initialisation du téléphone mobile.

Cette opération d'initialisation commence par une lecture 34 du contenu de la carte 25 présente dans le lecteur 17 pour savoir si elle est une carte cargo. Dans ce but cette carte comporte dans un emplacement mémoire prédéterminé, par exemple à l'adresse du tout début de la mémoire 26, une information d'identité 35 enregistrée qui permet au programme de déchargement de vérifier que la carte on face du lecteur 17 est une carte cargo. Si ce n'est pas le cas (comme cela se présente habituellement lorsqu'une telle carte cargo n'est pas présente), la suite 36 du programme 20-30 se produit normalement et conduit à l'utilisation connue du téléphone mobile. Si la carte est une carte cargo, éventuellement le programme d'initialisation 30 pourra comporter une séquence de vérification et d'authentification par laquelle un code secret 37 mémorisé dans la carte 25 sera comparé avec un code secret attendu par le sous programme 30.

Dans le but de comptabiliser les déchargements, la mémoire 26 de la carte cargo 25 sera pourvue d'un enregistrement 38 comportant un certain nombre d'unités 39. Ces unités peuvent être dans un état oblitéré ou dans un état disponible. Au cours d'une étape 40 consécutive à l'étape 34, le programme 30 vérifie que l'enregistrement 38 comporte encore des unités 39 disponibles. S'il n'en comporte plus, on considérera que le compteur d'unités est bloqué. Le programme 30 provoquera alors l'affichage sur l'écran 2 d'une information 41 de rejet signalant à l'opérateur que le crédit d'utilisation de la carte cargo 25 est épuisé. De préférence, l'information 41 invitera l'opérateur à remplacer la carte cargo 25 par la carte SIM initiale ou par une autre carte cargo.

S'il reste des unités, le programme 30 lit, au cours d'un test 42 le premier enregistrement de fonction supplémentaire 28 qui est présenté dans la mémoire 26. Ces enregistrements de fonction supplémentaire peuvent être rangés ainsi, avec des numéros, dans la mémoire 26, ou comporter, s'ils sont de longueurs variables, chacun une adresse de départ et une adresse d'arrivée. Au cours du test 42 qui sera répété par la suite on sait ainsi à chaque fois où doit commencer une lecture suivante. Le test 42 a aussi pour objet de vérifier que la fonction dont les éléments viennent d'être prélevés dans la région 28 de la mémoire 26 n'est pas déjà présente dans la mémoire programme 14. Eventuellement cette présence sera vérifiée eu égard à une version de mise à jour de la fonction présente dans la mémoire 14.

Si la fonction n'est pas présente, elle est proposée au cours d'une opération 43 au déchargement dans la mémoire 14. L'opération 43 comporte ainsi la lecture, en début de l'enregistrement 28 d'un intitulé de la fonction et l'affichage sur l'écran 2 de cet intitulé. Par suite, le programme 30 donne à l'utilisateur la possibilité au cours d'une instruction 44 de provoquer ou non le déchargement de l'option présentée. Dans ce cas, le client donne son accord ou refuse. Dans le cas où il y aurait un accord, un déchargement 45 proprement dit des éléments 28 d'instruction correspondant au programme affiché est entrepris.

Ce déchargement peut prendre plusieurs formes. Dans une forme simple, les éléments d'instructions 28 comportent un sous-programme entier utilisable pour constituer, dans le cadre du programme 20, la mise en oeuvre d'une fonction FCT1. Dans ce cas l'opération de déchargement 45 comporte la recopie dans la mémoire 14 des instructions correspondantes, en forme exécutables. Eventuellement, si la place en mémoire 26 de la carte cargo est limitée, les éléments d'instructions 26 seront présents sous la forme d'un sous-programme source. L'opération de déchargement comportera alors une compilation des instructions sources pour charger des instructions exécutables correspondantes dans le programme 20.

De préférence cependant, on résoudra autrement le problème d'exiguïté de la mémoire 26 de la carte cargo 25. De cette façon, celle-ci pourra être elle-même une carte à puce à bas coût, contenant peu de mots mémoires. Dans ce mode préféré, le programme 20 comporte déjà (sous une forme exécutable) des instructions 46 et 47 correspondant aux fonctions FCT1, FCT2, etc. Cependant, les enregistrements relatifs à ces fonctions sont associés à des zones mémoires de verrou 23 et 24 vues précédemment. Dans ce cas, l'opération de déchargement comportera, au lieu de la mémorisation d'éléments de programme contenus dans les zones 28 et 29 de la mémoire 26, le déverrouillage des verrous 23 et 24 à l'aide de clefs 48 et 49 contenues dans la mémoire 26.

Selon l'invention, les éléments d'instructions sont donc soit les instructions source, soit les instructions exécutables, soit les clefs.

Dans le dernier mode de fonctionnement, au moment de la mise en service normale du téléphone mobile, le programme 20 lit les intitulés de toutes les fonctions disponibles dans les sous-programmes de ce programme 20. Mais il ne présente en un menu utilisable par l'utilisateur que ceux pour lesquels un verrou 23 ou 24 a été débloqué, à l'aide d'une clef 48 ou 49. Dans ces conditions, seuls les fonctions dont les sous-programmes sont débridés sont exécutables par le téléphone mobile.

L'opération de déblocage des verrous 23 et 24 est de préférence exécutée dans des conditions de sécurité analogues à celles de la lecture et de l'authentification du code secret 37. Le système d'exploitation 21 comporte les jeux d'instructions nécessaires pour mener à bien ces vérifications. Dans l'état actuel de la technique, on sait qu'avec des clefs de 512 bits on obtient une sécurité suffisante.

Bien entendu, l'opération de déchargement sera accompagnée de préférence de l'oblitération d'une des unités 39 de l'enregistrement 38.

L'opération 45 de même que le test 44 s'il est négatif sont suivis par la progression 50 de la lecture du contenu de la carte cargo 25. Au cours d'un test 51 ultérieur à cette progression on vérifie que la fonction lue précédemment avait été la dernière ou non. Si elle n'avait pas été la dernière, on retourne au test 40 et la suite des opérations se répète comme vu ci-dessus. Dans ce cas en une même opération, l'intermédiaire revendeur peut décharger dans le téléphone mobile de l'utilisateur autant de fonctions qu'ils en ont convenu commercialement. Lorsque toutes les fonctions ont été passées en revue, le test 51 débouche sur une opération 52 au cours de laquelle l'intermédiaire est amené à intervertir à nouveau les cartes à puce de manière à remettre la carte SIM dans le téléphone mobile. Dans ces conditions, les frais de cession des options sont supportés par l'intermédiaire. Libre à lui de refacturer ces options à l'utilisateur, ou de les inclure dans une négociation plus globale. En tous cas, les intérêts de l'opérateur de téléphonie mobile, ou du fabricant du téléphone mobile, sont protégés.

Le dernier changement de carte à puce peut être effectué, comme le précédent, en provoquant un arrêt du téléphone mobile (sans déconnexion de la batterie de manière à maintenir l'intégrité de la mémoire dynamique 13). Lors de la réinsertion de la carte SIM 18, les clefs CLEF 1 et CLEF 2 de déverrouillage des verrous 23 et 24 peuvent être présentes dans cette mémoire dynamique 13. Dans ce cas l'option de déchargement ne sera utilisable que pour une seule session, jusqu'à ce que le téléphone mobile soit éteint. Une telle option peut concerner les opérations qui ne doivent être exécutées qu'une seule fois. Par exemple il peut s'agir d'un changement de numéro de téléphone de l'abonné. Il peut également s'agir de la modification des conditions d'abonnement. Dans ce cas, l'intermédiaire après avoir effectué l'opération correspondant à la fonction déchargée, arrêtera le téléphone mobile, au besoin en débranchant la batterie, avant de la rebrancher de manière à ce qu'une autre modification du même type ne puisse plus être entreprise.

Par contre si les fonctions déchargées doivent être laissées à disposition d'une manière permanente à l'utilisateur, les clefs CLEF 1 et CLEF 2 des zones 48 et 49 de la mémoire 26 seront enregistrées dans des enregistrements 53 et 54 de la mémoire de données 15 non volatile. Celle-ci comportera donc, en plus des informations habituelles de numéro de série, de numéro d'abonnement et de répertoire propre à l'abonné, des clefs correspondant à l'utilisation des fonctions supplémentaires 46 et 47 verrouillées par des verrous 23 et 24.

En variante on peut prévoir que le lecteur 17 sera un lecteur double, le circuit d'interface mettant alternativement en service un des deux lecteurs en relation respectivement avec l'une ou l'autre des cartes SIM 18 ou cargo 25.

La réalisation ainsi décrite permet à n'importe quel intermédiaire, sans disposer d'un équipement spécifique de programmer à la demande un téléphone mobile tout en comptabilisant d'une manière rigoureuse les services proposés à la clientèle. Dans ce but l'enregistrement 38 pourra être dédoublé en autant d'enregistrements différents qu'il y a de fonctions ou de clefs différentes à décharger. Au besoin cet enregistrement 38 ne sert qu'à compter les nombres de déchargement, à des fins statistiques. Une fois que la carte 25 est inutilisable parce que ses unités 39 sont toutes oblitérées, elle peut être rejetée. S'il y a plusieurs compteurs, elle sera de préférence recyclée de manière à tenir compte des unités non consommées. Les cartes inutilisées sont alors rendues à l'opérateur de téléphonie mobile qui peut établir des statistiques sur l'intérêt relatif présenté par chacune des fonctions soumises.

## Revendications

1. Procédé de programmation d'un appareil (1) dans lequel
- on mémorise dans une mémoire (14) programme (20) de l'appareil des instructions (21, 22) à exécuter par cet appareil,
caractérisé en ce qu'il comporte les étapes suivantes
- on enregistre (26) dans une carte à puce cargo (25) des éléments (28, 29, 48, 49) d'instructions à exécuter,
- on enregistre dans un programme d'initialisation (30) de l'appareil une étape de déchargement de ces éléments d'instructions en provenance d'un lecteur de carte à puce de l'appareil,
- on place la carte à puce cargo dans l'appareil,
- on déclenche (44) par le programme d'initialisation le déchargement des éléments d'instruction,
- et on exécute ensuite les instructions à l'aide de ces éléments d'instruction.

2. Procédé selon la revendication 1, caractérisé en ce que
- on déclenche le programme d'initialisation à une mise en service de l'appareil.

3. Procédé selon l'une des revendications 1 à 2, caractérisé en ce que
- dans le programme d'initialisation on teste (34) si la carte à puce en relation avec le lecteur est une carte à puce cargo dont le contenu doit être déchargé, et.
- éventuellement, on teste (42) si la carte à puce cargo n'a pas déjà été déchargée dans la mémoire programme de l'appareil.

4. Procédé selon l'une des revendications 1 à 3, caractérisé en ce que
- pour utiliser les instructions déchargées, on réinitialise l'appareil.

5. Procédé selon l'une des revendications 1 à 4, caractérisé en ce que
- lors d'un déchargement des éléments d'instructions dans un appareil, on compte (39) le nombre des déchargements dans la carte à puce cargo.

6. Procédé selon l'une des revendications 1 à 5, caractérisé en ce que
- on enregistre les instructions dans une mémoire volatile (13) de l'appareil.

7. Procédé selon l'une des revendications 1 à 5, caractérisé en ce que
- on enregistre les instructions dans une mémoire non volatile (14) de l'appareil.

8. Procédé selon l'une des revendications 1 à 7, caractérisé en ce que
- on mémorise dans une mémoire programme de l'appareil des instructions à exécuter par cet appareil sous une forme bridée (23, 24),
- on décharge de la carte à puce cargo des clefs (48, 49) de débridage des instructions mémorisées bridées.

9. Procédé selon l'une des revendications 1 à 8, caractérisé en ce que
- au moment du déchargement on sollicite (43, 44) l'intervention d'un intermédiaire pour confirmer des options de chargement.
